(19)

**Europäisches Patentamt**
**European Patent Office**
**Office européen des brevets**

(11) **EP 1 863 853 B1**

(12) **EUROPEAN PATENT SPECIFICATION**

(45) Date of publication and mention
of the grant of the patent:
**21.12.2011 Bulletin 2011/51**

(51) Int Cl.:
***C08F 4/654*** (2006.01)   ***C08F 4/656*** (2006.01)
***C08F 10/00*** (2006.01)

(21) Application number: **06708772.6**

(86) International application number:
**PCT/EP2006/060737**

(22) Date of filing: **15.03.2006**

(87) International publication number:
**WO 2006/103170 (05.10.2006 Gazette 2006/40)**

(54) **CATALYST COMPONENTS FOR THE POLYMERIZATION OF OLEFINS**

KATALYSATORKOMPONENTEN FÜR DIE POLYMERISATION VON OLEFINEN

COMPOSANTS DE CATALYSEUR PERMETTANT DE POLYMERISER DES OLEFINES

(84) Designated Contracting States:
**AT BE BG CH CY CZ DE DK EE ES FI FR GB GR HU IE IS IT LI LT LU LV MC NL PL PT RO SE SI SK TR**

(30) Priority: **30.03.2005 EP 05102482**
**01.04.2005 US 667253 P**

(43) Date of publication of application:
**12.12.2007 Bulletin 2007/50**

(73) Proprietor: **Basell Poliolefine Italia S.r.l.**
**20127 Milano (IT)**

(72) Inventors:
• **MORINI, Giampiero**
**Basell Poliolefine Italia S.p.A.**
**I-35100 Padova (IT)**

• **CAMURATI, Isabella Maria Vittoria**
**I-44030 Pontegradella (FE) (IT)**
• **DALL'OCCO, Tiziano**
**I-44100 Ferrara (IT)**
• **LIGUORI, Dario**
**I-83020 Forino (AV) (IT)**
• **VITALE, Gianni**
**I-44100 Ferrara (IT)**

(74) Representative: **Giberti, Stefano et al**
**Basell Poliolefine Italia S.r.l.**
**Intellectual Property**
**P.le Privato G. Donegani 12**
**Casella Postale 19**
**44100 Ferrara (IT)**

(56) References cited:
**EP-A- 0 397 122     US-A- 5 726 261**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

The present invention relates to catalysts components for the polymerization of ethylene and its mixtures with olefins CH2=CHR, wherein R is an alkyl, cycloalkyl or aryl radical having 1-12 carbon atoms, comprising Ti, Mg, halogen, $OR^l$ groups in a specific ratio, which can be obtained by reacting under specific conditions a titanium compound having at least a Ti-Cl bond with a particular precursor. The catalyst components of the invention are suitably used in (co) polymerization processes of ethylene to prepare, in high yields, especially crystalline polymers having medium-narrow Molecular Weight Distribution (MWD). The MWD is an important characteristic of ethylene polymers in that it affects both the rheological behaviour, and therefore the processability, and the final mechanical properties. In particular, in the case of LLDPE, polymers with narrow MWD are suitable for films and injection molding in that deformation and shrinkage problems in the manufactured article are minimized. The width of the molecular weight distribution for the ethylene polymers is generally expressed as melt flow ratio F/E, which is the ratio between the melt index measured by a load of 21.6 Kg (melt index F) and that measured with a load of 2.16 Kg (melt index E). The measurements of melt index are carried out according to ASTM D-1238 and at 190°C. A catalyst component for preparing ethylene (co)polymers having narrow MWD is described in the European patent application EP-A-553805. The catalyst, comprising Ti, Mg, halogen, $OR^l$ groups is characterized by a ratio OR/Ti of at least 0.5, by a porosity (determined with mercury porosimeter) of from 0.35 to 0.7 which furthermore has a specific pore distribution. Said catalyst is obtained by a rather long process which comprises the preparation of a $MgCl_2$-alcohol adduct having about 3 moles of alcohol which is first thermally dealcoholated up to an intermediate alcohol content and then chemically dealcoholated up to an almost complete extent. The so created porous precursor is then reacted with a titanium alkoxy compound in the presence of a halogenating agent and, optionally, of a reducing agent. The catalyst so obtained is able to produce ethylene (co)polymers with a narrow MWD but the polymerization activities are low. Catalysts that are the product of a somewhat simpler process are described in USP 4,220,554. They are obtained by reacting a large excess of $TiCl_4$ with catalyst precursors of general formula $MgCl_n$ $(OR)_{2-n}$ in the presence of a internal electron donor compound at high temperatures (120°C). The hydrogen response and the activity of the final catalyst component however, is not satisfactory.

In EP 301 894 a catalyst comprising Ti, Mg, halogen, OR groups (R is an aliphatic, aromatic or cycloaliphatic hydrocarbon radical) in which the Mg/Ti molar ratio is from 0.5 to 50 and the OR/Ti is from 1.5 to 5, is used for the preparation of amorphous ethylene copolymers. All the examples are directed to the production of amorphous copolymers and terpolymers with no indication about the suitability for the production of crystalline ethylene polymers with medium-narrow molecular weight distribution.

US-A-5 726 261 disloses spherical catalyst components supported on a magnesium dihalide in active form comprising a titanium compound containing at least one Ti-halogen bond and one OR group, in such an amount as to yield molar ratios OR/Ti which are greater than or equal to 0.5; optionally, an electron donor compound can also be present.

EP-A-397 122 provides an olefin polymerization catalyst comprising a solid catalyst component represented by the composition formula

MgmTi(OR)nXp[ED]q

wherein R is a hydrocarbon group having 1 to 20 carbon atoms, X is halogen, ED is an electron donative compound, and m, n, p and q are each a number satisfying $1 \leq m \leq 51$, $0 < n \leq 5$, $5 \leq p \leq 106$ and $0.2 \leq q \leq 2$.

It is therefore still felt the need of a catalyst component suited to form a catalyst system showing a good balance of polymerization activity, ability to form ethylene polymers with narrow MWD and good hydrogen response.

The applicant has now found that the above needs are satisfied by catalyst components characterized by certain chemical features and by a specific pattern when analyzed through the solid state NMR (SS-NMR). In particular, said solid catalyst components comprise Ti, Mg, halogen, $OR^l$ groups, where $R^l$ is a C1-C12 hydrocarbon group optionally containing heteroatoms, having a $OR^l$/Ti molar ratio higher than 1.5 with the proviso that when the $OR^l$/Ti molar ratio is equal to, or lower than, 3 the Mg/Ti molar ratio is less than 4, when the $OR^l$/Ti molar ratio is higher than 4 the Mg/Ti molar ratio is equal to or higher than 4 and when both the Mg/Ti molar ratio and the $OR^l$/Ti molar ratio are in the range from 3 to 4 at least one of the following equations is satisfied:

$$(1) \quad (Mg/Ti)-(OR^l/Ti) \geq 0.5$$

$$(2) \quad (Mg/Ti)+(OR^l/Ti) \geq 7$$

said solid catalyst component being also characterized by the fact it shows in the pattern of the SS-NMR recorded under the conditions set forth below one or more signals (A)

having a maximum in the region 60-75 (ppm) and one or more signals (B) having a maximum in the region 78-108 (ppm) such that the ratio $I^A/I^B$, in which $I^A$ is the integral of the signals having the maximum in the region between 60 and 75 ppm and $I^B$ is the integral of the signals having the maximum in the region between 78 and 108 ppm, is higher than 0.8.

Preferably, the ratio $I^A/I^B$ is higher than 1 and more preferably in the range 1-5.

In a preferred aspect the amount of titanium, with respect to the total weight of said solid catalyst component, is higher than 4% and preferably higher than 5% by wt.

Preferably the $OR^I$ /Ti molar ratio is higher than 2.

The applicant has also found that the above catalyst components having the described chemical features can be characterized in an alternative way as the product obtainable by reacting a titanium compound having at least a Ti-Cl bond with a catalyst precursors of formula $MgCl_n(OR^I)_{2-n}$, where n is from 0.5 to 1.5 and $R^I$ has the meaning given above.

In a preferred embodiment of the invention $R^I$ is a C1-C8 hydrocarbon group selected from alkyl groups. Among them, particularly preferred are methyl, ethyl, n-propyl, n-butyl, i-butyl, and tert-butyl.

Among the titanium compounds containing at least one Ti-halogen bond, those having the formula $Ti(OR^I)_{p-y}Cl_y$, wherein $R^I$ has the meaning given above, p is the titanium valence and y is a number comprised between 1 and p, are preferred. Particularly preferred are the titanium compounds in which y ranges from 1 to 4 and particularly from 2 to 4, $TiCl_4$ is especially preferred.

Among the catalyst precursors particularly preferred are those in which $R^I$ is selected among a C1-C8 hydrocarbon group, preferably ethyl, and n ranges from 0.6 to 1.4, in particular from 0.7 to 1.3 and especially from 0.8 to 1.2. The said catalyst precursors can be generated by exchange reaction between organometallic compounds of formula $Cl_mMgR_{2-m}$, where m is from 0 to 1.5, and R is a hydrocarbon group, with an appropriate $OR^I$ group source. The $OR^I$ sources are for example $R^IOH$ alcohols or, preferably, a silicon compound of formula $(R^IO)_rSiR_{4-r}$ where r is from 1 to 4 and $R^I$ has the meaning given above. In turn, as generally known in the art, organometallic compounds of formula $Cl_mMgR_{2-m}$ can be obtained by the reaction between Mg metal and an organic chloride RCl, in which R is as defined above, optionally in the presence of suitable promoters. Preferably, the formation of $Cl_mMgR_{2-m}$ and the further exchange with the $OR^I$ source takes place in one single step. The reaction can be carried out in a liquid inert medium such as hydrocarbon that is liquid at room temperature. Usually, upon a substantial amount of exchange with the OR source occurred, the catalyst precursors precipitate and can be easily isolated.

As mentioned above the reaction between titanium compound having at least a Ti-Cl bond and the catalyst precursor should be carried out under different conditions. It is within the ordinary knowledge of the skilled in the art that there are several ways of obtaining the same results.

Given that the titanium compound acts as a halogenating agent with respect to the precursor, it is in principle possible to obtain the desired final ratio either by using a limited molar amount of titanium compound or by keeping conditions such that the halogenation activity is depressed.

According to one preferred embodiment, the catalyst component is obtained by reacting the catalyst precursor with a titanium compound, preferably $TiCl_4$, used in an amount such that the molar ratio between the titanium compound and the $OR^I$ groups of the catalyst precursor and is 4 or less. Preferably said ratio is lower than 3, and more preferably it ranges from 0.1 to 2.5. In this embodiment the reaction temperature is not particularly critical and can range from room temperature up to 150°C preferably in the range 40-120°C. In view of the limited amount of titanium compound, preferably $TiCl_4$, it is preferred carrying out the reaction in an inert medium, that is liquid at least at the reaction temperature. Preferred inert medium are liquid aliphatic or aromatic hydrocarbons, optionally chlorinated, and among them those having from 3 to 20 carbon atoms. Especially preferred are propane, n-butane, n-pentane, n-hexane, n-heptane, benzene, toluene and isomers thereof. Mixture of two or more of said hydrocarbons can be used. Provided that the final $OR^I$/Ti molar ratio of higher than 1.5 is maintained, the reaction medium can also comprise chlorinated compounds having a chlorinating ability inferior to that of $TiCl_4$ such as $SiCl_4$, or $SnCl_4$.

Due to the halogenating capability of the titanium compound, upon reaction with the catalyst precursor a certain amount of magnesium chloride may be formed.

The solid catalyst components according to the present invention are converted into catalysts for the polymerization of olefins by reacting them with organoaluminum compounds according to known methods.

In particular, it is an object of the present invention a catalyst for the polymerization of olefins $CH_2=CHR$, in which R is hydrogen or a hydrocarbyl radical with 1-12 carbon atoms, comprising the product of the reaction between:

(a) a solid catalyst component as described above,

(b) an alkylaluminum compound and, optionally,

(c) an external electron donor compound.

The alkyl-Al compound can be preferably selected from the trialkyl aluminum compounds such as for example trimethylaluminum (TMA), triethylaluminum (TEA) , triisobutylaluminum (TIBA)), tri-n-butylaluminum, tri-n-hexylaluminum, tri-n-octylaluminum. Also alkylaluminum halides and in particular alkylaluminum chlorides such as diethylaluminum chloride (DEAC), diisobutylalumunum chloride, Al-sesquichloride and dimethylaluminum chloride (DMAC) can be used. It is also possible to use, and in certain cases preferred, mixtures of trialkylaluminum's with alkylaluminum halides. Among them mixtures between TEAL and DEAC are particuallry preferred.

The above mentioned components (a)-(c) can be fed separately into the reactor where, under the polymerization conditions can exploit their activity.

The so formed catalyst system can be used directly in the main polymerization process or alternatively, it can be pre-polymerized beforehand. A pre-polymerization step is usually preferred when the main polymerization process is carried out in the gas phase. The prepolymerization can be carried out with any of the olefins $CH_2=CHR$, where R is H or a C1-C10 hydrocarbon group. In particular, it is especially preferred to pre-polymerize ethylene or mixtures thereof with one or more $\alpha$-olefins, said mixtures containing up to 20% in moles of $\alpha$-olefin, forming amounts of polymer from about 0.1 g per gram of solid component up to about 1000 g per gram of solid catalyst component. The pre-polymerization step can be carried out at temperatures from 0 to 80°C, preferably from 5 to 70°C, in the liquid or gas phase. The pre-polymerization step can be performed in-line as a part of a continuous polymerization process or separately in a batch process. The batch pre-polymerization of the catalyst of the invention with ethylene in order to produce an amount of polymer ranging from 0.5 to 20 g per gram of catalyst component is particularly preferred. Examples of gas-phase processes wherein it is possible to use the catalysts of the invention are described in WO 92/21706, USP 5,733,987 and WO 93/03078. These processes comprise a pre-contact step of the catalyst components, a pre-polymerization step and a gas phase polymerization step in one or more reactors in a series of fluidized or mechanically stirred bed. In a particular embodiment, the gas-phase process can be suitably carried out according to the following steps:

(i) pre-polymerizing with one or more olefins of formula $CH_2=CHR$, where R is H or a C1-C10 hydrocarbon group, up to forming amounts of polymer from about 0.1 up to about 1000 g per gram of solid catalyst component (a); and

(ii) polymerizing in the gas-phase ethylene, or mixtures thereof with $\alpha$-olefins $CH_2=CHR$ in which R is a hydrocarbon radical having 1-10 carbon atoms, in one or more fluidized or mechanically stirred bed reactors, in the presence of the product coming from (i).

However, the catalysts of the invention are particularly suited for slurry polymerization in an inert medium such as propane, butane, pentane, hexane, heptane and mixtures thereof.

As already mentioned, the catalysts of the present invention are suitable for preparing ethylene polymers having the desired balance of catalyst activity, hydrogen response and suitable MWD. In particular it is possible to obtain a very narrow molecular weight distribution which is characterized by a F/E ratio of lower than 40, preferably lower than 35 and in some cases lower than 30. When the ethylene is polymerized together with a minor amount of an alpha olefin as comonomer, selected from propylene, butene-1, hexene-1 and octene-1, a linear low density polyethylene having a density lower than 0.940 g/cm$^3$ with a very good quality is obtained which is indicated by the low ratio among weight of xilene soluble fraction and weight of comonomer in the chain. In addition, the catalysts of the invention also show a very good hydrogen response, i.e., the capability of producing low molecular weight polymers in dependence of a given content of molecular weight regulator (usually hydrogen) in the polymerization system. This feature is particularly useful when polymers with a bimodal molecular weight distribution are to be prepared in sequential polymerization steps. In this case, it is suitable to have a catalyst with a good hydrogen response because low molecular weight polymers are produced with a minor amount of Mw regulator and, as a consequence, with a higher activity.

Non limitative examples of other polymers that can be prepared with the catalyst of the invention are very-low-density and ultra-low-density polyethylene (VLDPE and ULDPE, having a density lower than 0.920 g/cm$^3$, to 0.880 g/cm$^3$) consisting of copolymers of ethylene with one or more alpha-olefins having from 3 to 12 carbon atoms, having a mole content of units derived from ethylene of higher than 80%; high density ethylene polymers (HDPE, having a density higher than 0.940 g/cm$^3$), comprising ethylene homopolymers and copolymers of ethylene with alpha-olefins having 3-12 carbon atoms; elastomeric copolymers of ethylene and propylene and elastomeric terpolymers of ethylene and propylene with smaller proportions of a diene having a content by weight of units derived from ethylene of between about 30 and 70% The following examples are given in order to further describe the present invention in a non-limiting manner.

CHARACTERIZATION

The properties are determined according to the following methods:

Melt Index: measured at 190°C according to ASTM D-1238 condition "E" (load of 2.16 Kg), "P" (load of 5.0 Kg) and "F" (load of 21.6 Kg);

Fraction soluble in xylene. The solubility in xylene at 25°C was determined according to the following method: About 2.5 g of polymer and 250 cm$^3$ of o-xylene were placed in a round-bottomed flask provided with cooler and a reflux condenser and kept under nitrogen. The mixture obtained was heated to 135°C and was kept under stirring for about 60 minutes. The final solution was allowed to cool to 25°C under continuous stirring, and was then filtered. The filtrate was then evaporated in a nitrogen flow at 140°C to reach a constant weight. The content of said xylene-soluble fraction is expressed as a percentage of the original 2.5 grams.

Comonomer content

1-Butene or $\alpha$-olefins were determined via Infrared Spectrometry.

Effective density: ASTM-D 1505

Thermal analysis: Calorimetric measurements were performed by using a differential scanning calorimeter DSC Perkin-Elmer. The instrument is calibrated with indium and tin standards. The weighted sample (5-10 mg), obtained from the Melt Index determination, was sealed into aluminum pans, thermostatted at 5°C for 3 minutes, heated to 200°C at 20°C/min and kept at that temperature for a time long enough (5 minutes) to allow a complete melting of all the crystallites. Successively, after cooling at 20°C/min to -20°C, the peak temperature was assumed as crystallization temperature (Tc). After standing 5 minutes at 0°C, the sample was heated to 200°C at a rate of 20°C/min. In this second heating run, the peak temperature was assumed as melting temperature (Tm) and the area as the global melting hentalpy ($\Delta$H).

Determination of Mg, Ti: has been carried out via inductively coupled plasma emission spectroscopy (ICP).

Determination of Cl: has been carried out via potentiometric tritration.

Determination of alkoxides (as ROH): via Gas-Chromatography analysis after hydrolysis of the catalyst.

Solid State NMR analysis. Solid state $^{13}$C-NMR spectra were recorded on a Bruker DPX-200 spectrometer operating at 50.32 MHz in the Fourier transform mode. Samples were measured at room temperature in a 7 mm ZrO$_2$ rotor using a spinning speed of 4 KHz. Transients were accumulated using the cross polarization magic angle spinning technique (CP-MAS) with a recycle delay of 5 sec. and a contact time of 1 msec. All NMR experiments employed a proton decoupling field of sufficient magnitude to ensure full decoupling over the entire spectral width.

The rotors were prepared under nitrogen atmosphere.

Crystalline polyethylene in orthorhombic phase was taken as an external reference at 32.85 ppm from tetramethylsilane (TMS).

I$_A$ is defined as the integral of the signals having the maximum in the region between 60 and 75 ppm.

I$_B$ is defined as the integral of the signals having the maximum in the region between 78 and 108 ppm.

Ethylene Polymerization: general procedure.

A 4.5 liter stainless-steel autoclave equipped with a stirrer, temperature and pressure indicator, feeding line for hexane, ethylene, and hydrogen, was used and purified by fluxing pure nitrogen at 70°C for 60 minutes. Then, 1550 cm$^3$ of hexane containing 4.9 cm$^3$ of 10 % by wt/vol TEA/hexane solution, was introduced at a temperature of 30°C under nitrogen flow. In a separate 200 cm$^3$ round bottom glass bottle were successively introduced, 50 cm$^3$ of anhydrous hexane, 1 cm$^3$ of 10 % by wt/vol, TEA/hexane solution and about 0.010=0.025g of the solid catalyst of table 1. They were mixed together, aged 10 minutes at room temperature and introduced under nitrogen flow into the reactor. The autoclave was closed, then the temperature was raised to 85°C, hydrogen (partial pressure as indicated in table 2) and ethylene (7.0 bars partial pressure) were added.

Under continuous stirring, the total pressure was maintained at 85°C for 120 minutes by feeding ethylene. At the end the reactor was depressurised and the temperature was dropped to 30°C. The recovered polymer was dried at 70°C under a nitrogen flow.

EXAMPLES

All the solvent were deoxygenated, dried over LiAlH$_4$ and distilled under nitrogen atmosphere before the use.

TEA is Tris-Ethyl-Aluminum
TiBA is Tris-isoButyl-Aluminum
General preparation of the precursor

The synthesis of the precursor was performed as described in Example 1 of USP 4,220,554. The so obtained support has the following composition:

Mg, 20.2 wt.%
Cl, 29.8 wt.%
EtO groups 41.5 wt.%

Example 1:

Into a 500 cm3 four-necked round flask, purged with nitrogen, 280 $cm^3$ of heptane and 17.7 g (147 mg.at. of Mg) of the support previously prepared, were introduced at 25°C. Then, at the same temperature, 17 $cm^3$ (0.154 mol.) of $TiCl_4$ were added under stirring. The temperature was raised to 50°C in 1 h and maintained for 2 hours. Then, the stirring was discontinued, the solid product was allowed to settle for 30 minutes and the supernatant liquid was siphoned off.

The solid was washed twice with anhydrous heptane (2 x 100 $cm^3$) at 50 °C and three times at 25°C. Finally, the solid was dried under vacuum and analyzed. The results are reported in table 1.

Examples 2-7

The procedure reported in Example 1 was repeated changing the solvent, $TiCl_4$ amount and temperature/time of treatment as reported in table 1.

Example 8

15.5 g of the support (129 mg.at. of Mg) were charged, under stirring at 0°C, to a 500 $cm^3$ reactor containing 220 $cm^3$ of pure $SiCl_4$ and 6.9 $cm^3$ of pure $TiCl_4$ (62.5 mmol). The temperature was slowly raised to 40°C, then the temperature was kept constant for 4 hours. The stirring was discontinued, settling was allowed to occur and the liquid phase was removed at the temperature of 40°C. The residue was washed with anhydrous heptane, 150 $cm^3$ at 40°C (twice) then 3 times (150 $cm^3$ each time) with anhydrous heptane at room temperature. The residual solid component was vacuum dried at 50°Cand analyzed. The catalyst characteristics are reported in table 1.

Examples 9-14

They refer to the polymerization of ethylene carried out according to the general polymerization procedure under the specific conditions and with the catalyst components mentioned in table 2.

Examples 15-18

Ethylene/α-olefin copolymerization: general procedure

A 4.5 liter stainless-steel autoclave equipped with a stirrer, temperature, pressure indicator, feeding line for ethylene, propane, 1-butene, hydrogen, and a steel vial for the injection of the catalyst, was purified by fluxing pure nitrogen at 70°C for 60 minutes. It was then washed with propane, heated to 75°C and finally loaded with 800 g of propane, 1-butene (the amount reported in table 3), ethylene (7.0 bar, partial pressure) and hydrogen (as in table 3).

In a 100 $cm^3$ three neck glass flask were introduced in the following order, 50 $cm^3$ of anhydrous hexane, the Al-alkyl/hexane solution (as reported in Table 3), optionally the external electron donor compound (table 3) and the solid catalyst 0.005-0.015 g (reported in table 3). They were mixed together and stirred at room temperature for 5 minutes and then introduced in the reactor through the steel vial by using a nitrogen overpressure. Under continuous stirring, the total pressure was maintained constant at 75°C for 60 minutes by feeding ethylene. At the end the reactor was depressurized and the temperature was dropped to 30°C. The recovered polymer was dried at 70°C under a nitrogen flow and weighted. The polymer was then characterized as reported in table 3.

Example 19

Following the procedure of example 1 and under the conditions of example 3, a solid catalyst component was obtained with the following characteristics:

Mg, 15.5 wt.%; Ti, 7.8 wt.%; EtOH, 22.9 wt.% (EtO/Ti= 3.1 molar ratio) $I_A/I_B$ (SS-NMR) = 1.34

The solid catalyst was used in the ethylene/1-butene copolymerization in a fluidized gas-phase reactor as described in the following.

A 15.0 liter stainless-steel fluidized reactor equipped with gas-circulation system, cyclone separator, thermal exchanger, temperature and pressure indicator, feeding line for ethylene, propane, 1-butene, hydrogen, and a 1 L steel reactor for the catalyst preactivation (prepolymerization if needed) and injection. The gas-phase apparatus was purified by fluxing pure nitrogen at 40°C for 12 hours and then was circulated a propane (10 bar, partial pressure) mixture containing 1.5 g of the same Aluminum alkyl used in polymerization, at 80°C for 30 minutes. It was then depressurized and the reactor washed with pure propane, heated to 75°C and finally loaded with propane (14.3 bar partial pressure), 1-butene (1.4 bar partial pressure), ethylene (3.8 bar, partial pressure) and hydrogen (0.5 bar, partial pressure).

In a 100 cm3 three neck glass flask were introduced in the following order, 20 cm3 of anhydrous hexane, 8.4 mmol of TiBA as hexane solution and 0.072 g of the solid component upper described. They were mixed together and stirred at room temperature for 5 minutes and then introduced in the preactivation reactor maintained in a propane flow.

The autoclave was closed and 100 g of propane were introduced at 40°C. The mixture was stirred at 50°C for 30 minutes. The activated catalyst was then injected into the gas-phase reactor by using a propane overpressure (1 bar increase in the gas-phase reactor). The final pressure, in the fluidized reactor, was maintained constant at 80°C for 120 minutes by feeding a 7 wt.% 1-butene/ethylene mixture.

At the end, the reactor was depressurised and the temperature was dropped to 30°C. The recovered polymer was dried at 70°C under a nitrogen flow and weighted. 1170 g were achieved providing a mileage of 16.2 kg/gcat with the following characteristics:

MI E, 0.7 dg/min
MFR (MI F/MI E), 32.3
1-butene content, 7.2 wt.%
Xylene Soluble content, 3.7 wt.%
Tm, 120.5 °C

Table 1

| Ex. | Catalyst preparation | | | | Catalyst composition | | | | SS-NMR |
|---|---|---|---|---|---|---|---|---|---|
| | solvent | Ti/Mg m.r | Temp. °C | time h | Mg wt.% | Ti wt.% | EtOH wt.% | EtO/Ti m.r | $I_A/I_B$ |
| 1 | heptane | 1.0 | 50 | 2 | 14.7 | 8.2 | 22.3 | 3.0 | -- |
| 2 | heptane | 0.45 | 70 | 2 | 15.0 | 7.4 | 33.1 | 4.7 | 1.32 |
| 3 | heptane | 0.7 | 70 | 2 | 15.0 | 8.0 | 21.6 | 2.9 | 1.25 |
| 4* | heptane | 2 | 70 | 2 | 15.1 | 8.4 | 15.9 | 2 | 1.21 |
| 5 | heptane | 1 | 90 | 2 | 14.8 | 8.7 | 17.5 | 2.3 | 1.28 |
| 6 | toluene | 0.7 | 40 | 4 | 16.0 | 7.2 | 22.2 | 3.3 | 1.62 |
| 7 | toluene | 7.8 | 40 | 4 | 15.9 | 8.8 | 18.9 | 2.3 | 1.19 |
| 8 | $SiCl_4$ | 0.5 | 40 | 4 | 16.8 | 4.6 | 25.9 | 6.0 | 2.60 |
| *Not according to present invention. | | | | | | | | | |

Table 2

| Ex. | | Polymerization conditions | | Polymer Characterization | | | |
|---|---|---|---|---|---|---|---|
| | Solid cat. component | $H_2$ bar | Polymer g | Yield Kg/$g_{cat}$ | MIE g/10' | MIF/MIP | MIF/MIE |
| | | | | | | | |
| 9 | 1 | 4.00 | 630 | 36.8 | 17.8 | -- | -- |
| 10 | 2 | 3.0 | 480 | 25.7 | 3.60 | 9.9 | 28.9 |

(continued)

| Ex. | | Polymerization conditions | | Polymer Characterization | | | |
|---|---|---|---|---|---|---|---|
| | Solid cat. component | $H_2$ bar | Polymer g | Yield Kg/$g_{cat}$ | MIE g/10' | MIF/MIP | MIF/MIE |
| 11* | 4 | 3.00 | 605 | 27.5 | 14.6 | -- | 28.8 |
| 12 | 5 | 4.00 | 580 | 48.3 | 16.5 | 11.4 | 35.2 |
| 13 | 7 | 3.00 | 510 | 26.0 | 11.10 | 10.2 | 31.8 |
| 14 | 8 | 3.00 | 610 | 29.8 | 4.40 | 9.8 | 27.3 |
| * Not according to present invention | | | | | | | |

Table 3

| Ex. | Solid cat. component | Cocatalyst | α-olefin | | | polymer | Polymer Characterization | | | | | |
|---|---|---|---|---|---|---|---|---|---|---|---|---|
| | | type | $C_4^-$ g | $H_2$ Bar | time min | g | Yield Kg/g*h | MIE g/10' | $C_4$ wt.% | X.S wt.% | Tm °C | |
| | | | | | | | | | | | | |
| 15 | 3 | TEA(1) | 180 | 1.00 | 61 | 180 | 33.4 | 4.3 | 8.1 | 6.7 | 123.5 | |
| 16 | 5 | TEA/DEAC/THF (2) | 150.0 | 1.00 | 21 | 202 | 38.5 | 2.8 | 7.8 | 5.6 | 121.6 | |
| 17 | 6 | TEA/DEAC/THF (2) | 180.0 | 1.50 | 88 | 190 | 14.7 | 2.4 | 6.8 | 4.7 | --- | |
| 18 | 8 | TEA(1) | 180.0 | 0.50 | 120 | 168 | 16.8 | 0.5 | 4.8 | 3.0 | 124.8 | |

Polym. Cond (1).: Propane 800 g; TEA, 6.1 mmol; $C_2H_4$ 7 bar; Temper. 75°C;.
Polym. Cond. (2): Propane 800 g; TEA, 5.7 mmol; DEAC, 2.7 mmol; THF, 1.7 mmol; $C_2H_4$ 7 bar; Temper. 75°C;.

**Claims**

1. Catalyst components for the polymerization of olefins comprising solid catalyst components comprise Ti, Mg, halogen, $OR^I$ groups, where $R^T$ is a C1-C12 hydrocarbon group optionally containing heteroatoms, having a $OR^I$/Ti molar ratio higher than 2 and amount of titanium, with respect to the total weight of said solid catalyst component, higher than 4%, with the proviso that when the $OR^I$/Ti molar ratio is equal to, or lower than, 3 the Mg/Ti molar ratio is less than 4, when the $OR^I$/Ti molar ratio is higher than 4 the Mg/Ti molar ratio is equal to, or higher than, 4 and when both the Mg/Ti molar ratio and the $OR^I$/Ti molar ratio are in the range from 3 to 4 at least one of the following equations is satisfied:

$$1) \qquad (Mg/Ti)-(OR^I/Ti) \geq 0.5$$

$$2) \qquad (Mg/Ti)+(OR^I/Ti) \geq 7$$

said solid catalyst component being also **characterized by** the fact it shows in the pattern of the SS-NMR (solid state NMR) recorded under the conditions set forth in the experimental part of this specification. one or more signals (A) having a maximum in the region 60-75 (ppm) and one or more signals (B) having a maximum in the region 78-108 (ppm) such that the ratio $I^A/I^B$, in which $I^A$ is the integral of the signals having the maximum in the region between 60 and 75 (ppm) and $I^B$ is the integral of the signals having the maximum in the region between 78 and 108 (ppm), is higher than 0.8.

2. Catalyst component according to claim 1 in which the ratio $I^A/I^B$ is higher than 1.

3. Catalyst component according to claim 1 in which $R^I$ is a C1-C8 hydrocarbon group selected from alkyl groups.

4. Catalyst components according to claim 1 further **characterized by** the fact that it is obtainable by reacting a titanium compound having at least a Ti-Cl bond with a catalyst precursors of formula $MgCl_n(OR^I)_{2-n}$, where n is from 0.5 to 1.5 and $R^I$ has the meaning given above.

5. Catalyst component according to claim 4 in which the titanium compounds are those having the formula $Ti(OR^I)_{p-y}Cl_y$, wherein $R^I$ has the meaning given above, p is the titanium valence and y is a number comprised between 1 and p.

6. Catalyst components according to claim 4 obtained by reacting the catalyst precursor with a titanium compound used in amounts such the molar ratio between the titanium compound and the $OR^I$ groups of the catalyst precursor is less than 4.

7. Catalyst components according to claim 6 in which the reaction is carried out in an inert medium, that is liquid at least at the reaction temperature.

8. Catalyst for the polymerization of olefins $CH_2$=CHR, in which R is hydrogen or a hydrocarbyl radical with 1-12 carbon atoms, comprising the product of the reaction between:

    (a) a solid catalyst component according to anyone of the preceding claims,
    (b) an alkylaluminum compound and, optionally,
    (c) an external electron donor compound.

9. Process for the polymerization of olefins carried out in the presence of the catalyst of claim 8.

**Patentansprüche**

1. Katalysatorkomponenten zur Polymerisation von Olefinen, umfassend feste Katalysatorkomponenten aus: Ti, Mg, Halogen, $OR^I$-Gruppen, wobei $R^I$ eine $C_1$-bis $C_{12}$-Kohlenwasserstoffgruppe ist, gegebenenfalls mit Heteroatomen, mit einem Molverhältnis von $OR^I$ zu Ti höher als 2 und einer Titanmenge bezogen auf das Gesamtgewicht der festen Katalysatorkomponente höher als 4 %, mit der Maßgabe, dass wenn das Molverhältnis von $OR^I$ zu Ti gleich oder niedriger als 3 ist, das Molverhältnis von Mg zu Ti weniger als 4 ist, und wenn das Molverhältnis von OR$^I$ zu Ti höher als 4 ist, das Molverhältnis von Mg zu Ti gleich oder höher als 4 ist und wenn sowohl das Molverhältnis von Mg zu Ti als auch das Molverhältnis von OR$^I$ zu Ti im Bereich von 3 bis 4 liegen, mindestens eine der folgenden Gleichungen erfüllt ist:

$$1) \quad (Mg/Ti)-(OR^I/Ti) \geq 0{,}5$$

$$2) \quad (Mg/Ti)+(OR^I/Ti) \geq 7$$

wobei die feste Katalysatorkomponente auch **dadurch gekennzeichnet ist, dass** sie im ss-NMR-Spektrum (Festköper-NMR), das unter den im experimentellen Teil dieser Patentschrift dargelegten Bedingungen aufgezeichnet wird, ein oder mehr Signal(e) (A) mit einem Maximum im Bereich von 60 bis 75 (ppm) und einem oder mehr Signal (en) (B) mit einem Maximum im Bereich von 78 bis 108 (ppm) dergestalt aufweist, dass das Verhältnis von $I^A$ zu $I^B$, wobei $I^A$ das Integral der Signale mit dem Maximum im Bereich zwischen 60 und 75 (ppm) ist und $I^B$ das Integral der Signale mit dem Maximum im Bereich zwischen 78 und 108 (ppm) ist, höher als 0,8 ist.

2. Katalysatorkomponente nach Anspruch 1, wobei das Verhältnis $I^A$ zu $I^B$ höher als 1 ist.

3. Katalysatorkomponente nach Anspruch 1, wobei R$^I$ eine aus Alkylgruppen ausgewählte $C_1$-bis $C_8$-Kohlenwasser-stoffgruppe ist.

4. Katalysatorkomponente nach Anspruch 1, die ferner **dadurch gekennzeichnet ist, dass** sie durch zur Reaktion bringen einer Titanverbindung mit mindestens einer Ti-Cl-Bindung mit einem Katalysator-Präkursor der Formel $MgCl_n(OR^I)_{2-n}$ erhältlich ist, wobei n von 0,5 bis 1,5 beträgt und R$^I$ die oben angegebene Bedeutung aufweist.

5. Katalysatorkomponente nach Anspruch 4, wobei die Titanverbindungen die mit der Formel $Ti(OR^I)_{p-y}Cl_y$ sind, wobei R$^I$ die vorstehend angegebene Bedeutung aufweist, p die Titanvalenz ist und y eine zwischen 1 und p liegende Zahl ist.

6. Katalysatorkomponenten nach Anspruch 4, die durch das zur Reaktion bringen des Katalysator-Präkursors mit einer Titanverbindung erhalten werden, die in Mengen dergestalt verwendet wird, dass das Molverhältnis zwischen der Titanverbindung und den OR$^I$-Gruppen des Katalysator-Präkursors weniger als 4 ist.

7. Katalysatorkomponenten nach Anspruch 6, wobei die Reaktion in einem inerten Medium durchgeführt wird, das mindestens bei der Reaktionstemperatur flüssig ist.

8. Katalysatorkomponenten zur Polymerisation von Olefinen $CH_2$=CHR, wobei R Wasserstoff oder ein Hydrocarbylrest mit 1 bis 12 Kohlenstoffatomen ist, umfassend das Produkt der Reaktion zwischen:

    (a) einer festen Katalysatorkomponente nach einem der vorangehenden Ansprüche,
    (b) einer Alkylaluminiumverbindung und, gegebenenfalls,
    (c) einer externen Elektronendonatorverbindung.

9. Verfahren zur Polymerisation von Olefinen, das in Gegenwart des Katalysators nach Anspruch 8 durchgeführt wird.


**Revendications**

1. Composants de catalyseur pour la polymérisation d'oléfines comprenant des composants de catalyseur solides comprenant Ti, Mg, halogène, des groupes OR$^I$, où R$^I$ représente un groupe hydrocarboné en C1-C12 contenant éventuellement des hétéroatomes, présentant un rapport molaire OR$^I$/Ti supérieur à 2 et une quantité de titane, par rapport au poids total dudit composant de catalyseur solide, supérieure à 4%, à condition que, quand le rapport molaire OR$^I$/Ti est égal ou inférieur à 3, le rapport molaire Mg/Ti soit inférieur à 4, quand le rapport molaire OR$^I$/Ti est supérieur à 4, le rapport molaire Mg/Ti soit égal ou supérieur à 4 et, quand à la fois le rapport molaire Mg/Ti et le rapport molaire OR$^I$/Ti sont dans la plage de 3 à 4, au moins une des équations suivantes soit satisfaite :

$$1) \quad (Mg/Ti)-(OR^{I}/Ti) \geq 0,5$$

$$2) \quad (Mg/Ti)+(OR^{I}/Ti) \geq 7$$

ledit composant de catalyseur solide étant également **caractérisé par le fait qu'**il montre, dans le schéma de SS (Solid State - état solide) -RMN enregistré dans des conditions exposées dans la partie expérimentale de cette demande, un ou plusieurs signaux (A) présentant un maximum dans la région de 60-75 (ppm) et un ou plusieurs signaux (B) présentant un maximum dans la région de 78-108 (ppm) tels que le rapport $I^{A}/I^{B}$, dans lequel $I^{A}$ est l'intégrale des signaux présentant le maximum dans la région entre 60 et 75 (ppm) et $I^{B}$ est l'intégrale des signaux présentant le maximum dans la région entre 78 et 108 (ppm), est supérieur à 0,8.

2. Composant de catalyseur selon la revendication 1, dans lequel le rapport $I^{A}/I^{B}$ est supérieur à 1.

3. Composant de catalyseur selon la revendication 1, dans lequel $R^{I}$ représente un groupe hydrocarboné en C1-C8 choisi parmi les groupes alkyle.

4. Composant de catalyseur selon la revendication 1, **caractérisé en outre par le fait qu'**il peut être obtenu par la réaction d'un composé de titane présentant au moins une liaison Ti-Cl avec des précurseurs de catalyseur de formule $MgCl_n(OR^{I})_{2-n}$, où n vaut de 0,5 à 1,5 et $R^{I}$ présente la signification donnée ci-dessus.

5. Composant de catalyseur selon la revendication 4, dans lequel les composés de titane sont ceux présentant la formule $Ti(OR^{I})_{p-y}Cl_y$, où $R^{I}$ présente la signification donnée ci-dessus, p est la valence du titane et y est un nombre compris entre 1 et p.

6. Composant de catalyseur selon la revendication 4, obtenu par la réaction du précurseur de catalyseur avec un composé de titane, utilisés en des quantités telles que le rapport molaire entre le composé de titane et les groupes $OR^{I}$ du précurseur de catalyseur est inférieur à 4.

7. Composant de catalyseur selon la revendication 6, la réaction étant réalisée dans un milieu inerte qui est liquide au moins à la température de la réaction.

8. Catalyseur pour la polymérisation d'oléfines $CH_2$=CHR, dans lequel R représente hydrogène ou un radical hydrocarboné contenant 1-12 atomes de carbone, comprenant le produit de la réaction entre :

(a) un composant de catalyseur solide selon l'une quelconque des revendications précédentes;
(b) un composé d'alkylaluminium et, éventuellement,
(c) un composé donneur d'électrons externe.

9. Procédé pour la polymérisation d'oléfines réalisé en présence du catalyseur selon la revendication 8.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 553805 A
- US P4220554 A
- EP 301894 A
- US 5726261 A

- EP 397122 A
- WO 9221706 A
- US P5733987 A
- WO 9303078 A